## Europäisches Patentamt

## European Patent Office

## Office européen des brevets

(19)

(11) Veröffentlichungsnummer: **0 144 979**
**B1**

(12) **EUROPÄISCHE PATENTSCHRIFT**

(45) Veröffentlichungstag der Patentschrift: **04.07.90**

(51) Int. Cl.⁵: **H 04 L 1/20**

(21) Anmeldenummer: **84114848.9**

(22) Anmeldetag: **06.12.84**

(54) Verfahren zur Messung von Bitfehlerraten bei binären Digitalsignalen.

(30) Priorität: **07.12.83 DE 3344264**

(43) Veröffentlichungstag der Anmeldung:
**19.06.85 Patentblatt 85/25**

(45) Bekanntmachung des Hinweises auf die
Patenterteilung:
**04.07.90 Patentblatt 90/27**

(84) Benannte Vertragsstaaten:
**AT BE CH DE FR GB IT LI NL SE**

(56) Entgegenhaltungen:
**EP-A-0 010 344**
**DE-A-2 515 595**
**GB-A-1 441 254**
**US-A-3 643 027**

(73) Patentinhaber: **Siemens Aktiengesellschaft**
**Wittelsbacherplatz 2**
**D-8000 München 2 (DE)**

(72) Erfinder: **Kloeber, Peter, Dipl.-Ing.**
**Uhdestrasse 20**
**D-8000 München 71 (DE)**

Courier Press, Leamington Spa, England.

## Beschreibung

Die Erfindung bezieht sich auf ein Verfahren zur Messung von Bitfehlerraten bei Digitalsignalen, bei dem von einem aus der zeit- und amplitudenentschiedenen digitalen Nachricht regenerierten Takt in einer digitalen Torzeitschaltung ein Torzeitsignal gewonnen wird, das jeweils dem einen Eingang von zahlenmäßig der Anzahl der vorliegenden Digitalsignale entsprechenden Detektoren zugeführt wird, deren Eingang mit einem binären Digitalsignal angesteuert wird und bei dem Ausgangssignale der Detektoren als Fehlersignale anschließend einem nachfolgenden Zähler zugeführt werden, der durch ein der Meßzeit entsprechendes periodisches Digitalsignal zurückgesetzt wird und dessen Ausgangssignal weitere Schaltelement ansteuert.

Bei digitalen Übertragungseinrichtungen kann es erforderlich sein, den Übertragungsweg bei einer gestörten Übertragung definiert abzuschalten bzw. auf einen nicht gestörten, parallel betriebenen Übertragungsweg umzuschalten. Für die dazu nötige Ermittlung der jeweiligen Bitfehlerrate wird üblicherweise das noch nicht regenerierte, d.h. noch nicht zeit- und amplituden-bewertete binäre Datensignal bezügich seiner sog. Augenöffnung (eye-pattern) untersucht. Dabei schließt sich das Auge mit zunehmend gestörter Übertragung, so daß mit einer analogen Schwellwertschaltung zu einem bestimmten Abtastzeitpunkt ein Fehlerimpulssignal gewonnen wird, das ein Maß für die Bitfehlerrate darstellt. Dieses Signal wird integriert und z.B. über eine weitere Schwellwertschaltung amplitudenentschieden.

Ein Verfahren der eingangs beschriebenen Art ist im wesentlichen aus der DE—A—25 15 595 bekannt. Bei diesem Verfahren zur kontinuierlichen oder intermittierenden Messung von Bitfehlerproportionen digitaler Übertragungen über Fernmeldeleitungen während des Betriebs zum Qualifizieren der Übertragungsgüte wird aus der von einem Empfänger abgegebenen digitalen Zeichenfolge eine phasenrichtige Taktimpulsfolge erzeugt, mittels welcher im Bereich des Entscheidungsmomentes ein Zeitintervall $2\Delta t$ ($\Delta t$ ist ein bestimmter Anteil der Bitlaufzeit) gewählt wird und danach in vorgegebenen Zeitintervallen diejenigen Übergänge gezählt werden, die in der digitalen Zeichenfolge vorkommen. Nach Ablauf dieser Zeit wird die Zählung erneut angefangen sowie in Abhängigkeit vom Ergebnis der Zählung ein logischer Zustand hervorgerufen. Hierbei wird also vor der Regenerierung der digitalen Zeichenfolge mit Hilfe von synchron laufenden Taktimpulsen eine Rauschanalyse vorgenommen, und aufgrund dieser Analyse wird das Ergebnis im Vergleich mit einem vorhergegebenen nominellen Wert als größer oder kleiner zu diesem gewertet.

Der Erfindung liegt die Aufgabe zugrunde, ein einfaches, mit digitalen Schaltmitteln durchführbares Verfahren zur Ermittlung von Bitfehlerraten bei binären Digitalsignalen anzugeben.

Diese Aufgabe wird gemäß der Erfindung in der Weise gelöst, daß die Detektoren aus einem D-Flip-Flop bestehen dessen Clockeingang mit je einen binären Datensignal angesteuert wird und dessen D-Eingang mit den Torzeitsignal angesteuert wird und das Ausgangssignal des den Detektoren nachgeschalteten Zählers eine retriggerbare monostabile Kippstufe ansteuert, deren Haltezeit größer als die Meßzeit ist. Die Verwendung eines amplitudenentschiedenen Digital-Signals als Eingangssignal ergibt gute Voraussetzungen für die Realisierung der Detektoren als D-Flip-Flop, die sich in einfacher Weise aufbauen und mit den nachfolgenden Bauelementen der Schaltung zu einem einzigen Baustein integrieren lassen.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen

Fig. 1 eine Schaltung zur Durchführung des erfindungsgemäßen Verfahrens,

Fig. 2 ein Impulsdiagramm, das die Gewinnung des Fehlersignals zeigt und

Fig. 3 eine weitere Schaltung zur Durchführung des erfindungsgemäßen verfahrens.

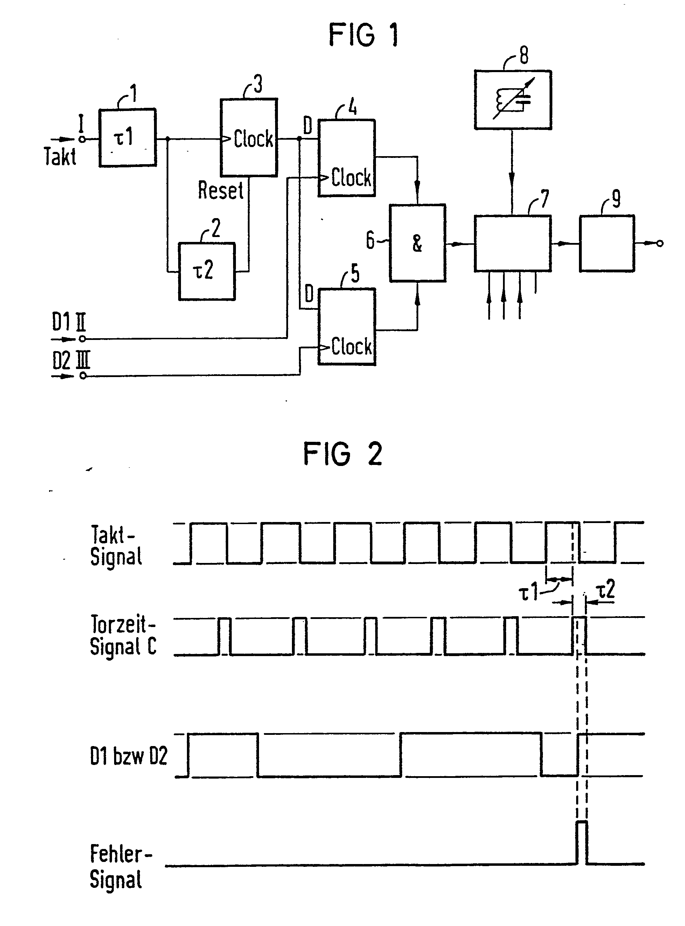

Die Schaltung nach Fig. 1 weist einen Eingang I für die Zuführung des Taktsignals und zwei Eingänge II und III für digitale Nachrichten D1 und D2 auf. Der Taktsignaleingang I ist an eine Laufzeitstufe 1 mit der Laufzeit $\tau 1$ angeschlossen, deren Ausgang einerseits mit dem Clock-Eingang eines D-Flip-Flops 3 und andererseits mit einer zweiten Laufzeitstufe 2 der Laufzeit $\tau 2$ verbunden ist, deren Ausgang an einen weiteren Eingang des D-Flip-Flops 3 angeschlossen ist. Das D-Flip-Flop 3 ist ausgangsseitig jeweils an den D-Eingang von zwei weiteren D-Flip-Flops 4,5 angeschaltet, deren jeweils zweiter Eingang. (Clock-Eingang) mit den Anschlüssen II und III für die beiden Digitalsignale D1 und D2 verbunden ist und deren Ausgang an ein UND-Gatter 6 geführt ist. Dem UND-Gatter 6 ist ein Zähler 7 nachgeschaltet, der einstellbar ausgebildet ist und mit einem Generator 8 für ein Resetsignal verbunden ist. An den Zähler 7 ist ausgangsseitig eine monostabile Kippstufe 9 angeschaltet, deren Ausgangsklemme den Fehlersignalausgang bildet.

Die Messung der Bitfehlerrate mittels dieser Schaltung wird nachstehend beschrieben. Die dabei genannten Signale sind im Diagramm nach Fig. 2 dargestellt. Es wird von einem aus der zeit- und amplitudenentschiedenen digitalen Nachricht regenerierten Takt (Taktsignal am Eingang I) in einer digitalen Torzeitschaltung, bestehend aus den beiden Laufzeitstufen 1 und 2 und dem D-Flip-Flop 3, ein sog. Torzeitsignal C gewonnen, das vorteilhaft in Bildmitte der digitalen Nachricht einen einstellbar kurzen Impuls bildet (vgl. Fig. 2). Hierzu wird das regenerierte Taktsignal in der Laufzeitstufe 1 um die Laufzeite $\tau 1$ verzögert und als Setzimpuls einer astabilen Kippstufe (im Ausführungsbeispiel das D-Flip-Flop 3) zugeführt sowie, nach Verzögerung um τ2 in der Laufzeitstufe 2, beim D-Flip-Flop 3 als Resetimpuls verwendet.

Das am Ausgang des Flip-Flops 3 gewonnene Torzeitsignal C wird an den D-Eingang der beiden weiteren D-Flip-Flops 4, 5 geführt, deren Clock-Eingänge mit den beiden binären Digitalsignalen D1 und D2 angesteuert werden, so daß nur während einer logischen 1 des Torsignals etwa auftretende fehlerhafte positive bzw. negative Schaltflanken des Digitalsignals die beiden Flip-Flops 4, 5 umschalten. Die in dem nachfolgenden UND-Gatter 6 kombinierten Fehlersignale werden dem vorteilhaft einstellbar ausgebildeten Zähler 7 zugeführt, der durch ein der Meßzeit entsprechendes, im Generator 8 erzeugtes periodisches Digitalsignal zurückgesetzt wird. Wird die programmierte Anzahl von Zählerimpulsen in einer Meßperiode erreicht, entsteht am Ausgang des Zählers 7 ein Überlaufsignal, das die retriggerbare monostabile Kippstufe 9 ansteuert, deren Haltezeit größer als die Meßzeit sein soll. Mit den Programmiereingängen des Zählers 7 kann damit jede gewünschte Bitfehlerrate angezeigt werden. Eine weitere Einstellmöglichkeit bietet ebenso die Variation der Meßzeit, d.h. die Frequenzvariation des Rücksetzimpulsgenerators 8.

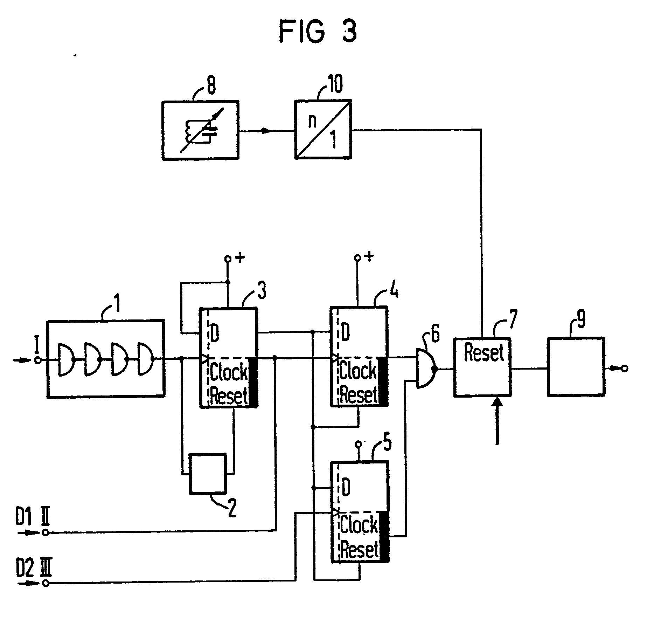

Fig. 3 zeigt eine Schaltung, die im Grundaufbau der Schaltung nach Fig. 1 entspricht, deren Wirkungsweise vorstehend erläutert wurde. Die gewünschte Bitfehlerrate wird hierbei durch Variation der Frequenz des Rücksetzimpulsgenerators 8 eingestellt, zu welchem Zweck diesem ein Teiler 10 mit dem Teilungsverhältnis n:1 nachgeschaltet ist. Als Laufzeitglied der Laufzeitstufe 1 werden mehrere hintereinandergeschaltete logische Gatter verwendet.

## Patentansprüche

1. Verfahren zur Messung von Bitfehlerraten bei binären Digitalsignalen, bei dem von einem aus der zeit- und amplituden-entschiedenen digitalen Nachricht regenerierten Takt in einer digitalen Torzeitschaltung ein Torzeitsignal gewonnen wird, das jeweils dem einen Eingang von zahlenmäßig der Anzahl der vorliegenden Digitalsignale entsprechenden Detektoren zugeführt wird, deren Eingang mit einem binären Digitalsignal angesteuert wird und bei dem die Ausgangssignale der Detektoren als Fehlersignale anschließend einem nachfolgenden Zähler zugeführt werden, der durch ein der Meßzeit entsprechendes periodisches Digitalsignal zurückgesetzt wird und dessen Ausgangssignal weitere Schaltelemente ansteuert, dadurch gekennzeichnet, daß die Detektoren (4, 5) je aus einem D-Flip-Flop bestehen dessen Clockeingang mit je einen binären Datensignal angesteuert wird und dessen D-Eingang mit dem Torzeitsignal angesteuert wird und das Ausgangssignal des den Detektoren (4, 5) nachgeschalteten Zählers (7) eine retriggerbare monostabile Kippstufe (9) ansteuert, deren Haltezeit größer als die Meßzeit ist.

2. Verfahren nach Anspruch 1, dadurch gekennzeichnet, daß zur Gewinnung des Torzeitsignals das regenerierte Taktsignal in einer Laufzeitstufe (1) um die Laufzeit τ1 verzögert und als Setzimpuls einer astabilen Kippstufe (3) zugeführt sowie in einer weiteren Laufzeitstufe (2) um die Laufzeit τ2 verzögert, als Reset-Impuls für die astabile Kippstufe (3) verwendet wird.

3. Verfahren nach Anspruch 1 oder 2, dadurch gekennzeichnet, daß das Torzeitsignal in Bitmitte der digitalen Nachricht einen einstellbar kurzen Impuls bildet.

4. Verfahren nach einem der Ansprüche 1 bis 3, dadurch gekennzeichnet, daß der Zähler (7) einstellbar ausgebildet ist.

5. Verfahren nach einem der Ansprüche 1 bis 4, dadurch gekennzeichnet, daß die Einstellung des Zählers (7) durch Frequenzvariation des Rücksetzimpulsgenerators erfolgt.

## Revendications

1. Procédé pour mesurer des taux d'erreurs sur les bits pour des signaux numériques binaires, selon lequel un signal de temps de transfert est obtenu à partir d'une cadence régénérée à partir de l'information numérique discriminée du point de vue temps et amplitude, dans un circuit numérique de commande du temps de transfert, ce signal de temps de transfert étant envoyé respectivement à une entrée de détecteurs qui sont prévus en unnombre égal au nombre des signaux numériques appliqués et dont l'entrée est commandée par un signal numérique binaire, et selon lequel les signaux de sortie des détecteurs sont ensuite envoyés, en tant que signaux d'erreur, à un compteur disposé en aval, qui est ramené à zéro par un signal numérique périodique correspondant à la durée de la mesure et dont le signal de sortie commande d'autres éléments de circuit, caractérisé par le fait que les détecteurs (4, 5) sont constitués chacun par une bascule bistable de type D, dont l'entrée des impulsions d'horloge est commandée respectivement par un signal binaire de données et dont l'entrée D est commandée par le signal de temps de transfert, et que le signal de sortie du compteur (7) branché en aval des détecteurs (4, 5) commande un étage à bascule monostable redéclenchable (9), dont le temps de maintien est supérieur à la durée de mesure.

2. Procédé suivant la revendication 1, caractérisé par le fait que pour l'obtention du signal de temps de transfert, le signal de cadence régénéré est retardé du retard τ1 dans un étage à retardement (1) et est envoyé, en tant qu'impulsion de positionnement, à un étage à bascule astable (3), et est retardé de la durée τ2 dans un autre étage de retardement (2), et est utilisé en tant qu'impulsion de remise à l'état initial pour l'étage à bascule astable (3).

3. Procédé suivant la revendication 1 ou 2, caractérisé par le fait que le signal de temps de transfert forme une impulsion de brève durée réglable au centre du profil de l'information numérique.

4. Procédé suivant l'un des revendications 1 à 3, caractérisé par le fait que le compteur (7) est agencé de manière à être réglable.

5. Procédé suivant l'une des revendications 1 à 4, caractérisé par le fait que le réglage du compteur (7) s'effectue au moyen d'une modification de la fréquence du générateur d'impulsions de remise à l'état initial.

## Claims

1. Method of measuring bit error rates of binary digital signals, in which a gate timing signal is extracted in a digital gate timing circuit from the clock pulse regenerated from the time- and amplitude-discriminated digital information, which gate timing signal is fed to in each case one input of detectors, whose numbers correspond to the number of digital signals present, the input of which is driven by a binary digital signal, and in which the output signals of the detectors are then fed as error signals to a subsequent counter which is reset by a periodic digital signal corresponding to the measuring time, and the output signal of which drives further switching elements, characterized in that the detectors (4, 5) consist in each case of a D-type flip-flop, the clock input of which is driven in each case by a binary data signal and the D-input of which is driven by the gate timing signal, and the output signal of the counter (7) downstream of the detectors (4, 5) drives a retriggerable monostable multivibrator (9) whose holding time is greater than the measuring time.

2. Method according to Claim 1, characterized in that, for extracting the gate timing signal, the regenerated clock signal is delayed in a delay stage (1) by the delay $\tau1$ and is fed as set pulse of an astable multivibrator (3), and is also used in a further delay stage (2), delayed by the delay $\tau2$, as reset pulse for the astable multivibrator (3).

3. Method according to Claim 1 or 2, characterized in that the gate timing signal forms a pulse of adjustable short duration in the bit centre of the digital information.

4. Method according to one of Claims 1 to 3, characterized in that the counter (7) is of adjustable design.

5. Method according to one of Claims 1 to 4, characterized in that the counter (7) is adjusted by varying the frequency of the reset pulse generator.

# FIG 1

# FIG 2

# FIG 3